# EUROPEAN PATENT APPLICATION

(11) **EP 4 841 463 A1**
(43) Date of publication of application: **18.11.2026**
(21) Application number: 25176522.8
(22) Date of filing: 14.05.2025
(51) Int. Cl.: G06F 16/2455

(54) **MACHINE LEARNING ELEMENT FOR PREDICTING QUERY TIME AND METHOD OF MAKING SUCH A MACHINE LEARNING ELEMENT**

(71) Applicant: Red Gate Software Limited, Cambridge CB4 0XB (GB)
(72) Inventor: JACKSON, Adam, Cambridge, CB4 0XB (GB)
(74) Representative: Mathys & Squire

(57) **Abstract**

An aspect of the disclosure provides a computer implemented method of estimating database query time, the method comprising: obtaining query data, defining a query which is to be executed on a database; obtaining schema data for the database; obtaining distribution data for the database, indicating a distribution of data content stored in the database; identifying parts of the schema data referred to in the query data; determining, based on the query data and the identified parts of the schema data, the corresponding parts of the distribution data, providing a graph data structure encoding the query data, the identified parts of the schema data, and the corresponding parts of the distribution data; and, operating a machine learning element on the graph data structure to estimate the query time.

## Description

### Field

The present disclosure relates to methods and apparatus and more particularly to methods and apparatus useful in determining the internal status of database systems, and still more particularly in determining the time that a query will take to execute on a database system.

### Background

Databases are frequently dynamic, in the sense that their size and content changes as data is added to and removed from the tables. In addition, database systems must manage load to ensure that performance is maintained.

Significant effort is therefore devoted to understanding how queries will perform on a database and very often, a key metric of query performance is so called "query time". Often this is used to define the amount of time needed to execute a given query on a given database.

Query time varies between different databases and depends on the number of tables which must be traversed and the number of rows of those tables which are to be read and selected. Query time also depends on the algorithmic complexity of the query itself and the algorithm's execution time is therefore challenging to estimate.

A field that is gaining attention is text-to-sql generation. In this application a user asks a model or computer program an analytical question such as 'how many users are over the age of 60' (i.e. in the form of natural language) and the model returns an appropriate SQL query. Ideas from this space can be carried over to query time prediction. This is because both need to create a mathematical representation of a query and of the target database.

Query time prediction is a modelling problem where both deep learning and classical machine learning techniques have been used, with recent literature focused on deep learning. This is an area of significant research interest. Prior publications include:
"PreQR: Pre-training Representation for SQL Understanding" 11 Jun 2022 Xiu Tang et. al. (https://paperswithcode.com/paper/preqr-pre-training-representation-for-sql) proposes a pre-trained SQL representation model, called PreQR, which extends the language representation approach to SQL queries.

"An End-to-End Learning-based Cost Estimator" 6 Jun 2019, Ji Sun et. al. (https://arxiv.org/abs/1906.02560) describes an end-to-end learning-based cost estimation framework based on a tree-structured model, which can estimate both cost and cardinality simultaneously.

"Learned Cardinalities: Estimating Correlated Joins with Deep Learning" Andreas Kipf et. al. (https://arxiv.org/pdf/1809.00677) describes a deep learning approach to cardinality estimation including a multi-set convolutional network (MSCN) tailored to representing relational query plans. This employs set semantics to capture query features and true cardinalities.

"Zero-Shot Cost Models for Out-of-the-box Learned Cost Prediction" by Benjamin Hilprecht et. al. (https://arxiv.org/abs/2201.00561) suggests a learning paradigm based on pre-trained cost models.

"Plan-Structured Deep Neural Network Models for Query Performance Prediction" Ryan Marcus et. al (https://arxiv.org/abs/1902.00132) describes an approach which is said to eliminate the need for human-crafted feature selection and automatically discovers complex performance models both at the operator and query plan level.

Such solutions may generally be built for one particular database, and may not always be applicable to databases in general.

### Summary

Embodiments of the present disclosure employ a machine learning element to predict query time in databases. The machine learning element may be configured to operate on user data in the form of a graph data structure encoding a query, the database schema, and statistics about the database's content.

Methods of the present disclosure may comprise operating the machine learning element in an "inference" phase of operation to estimate the query time of a query based on user data in this form. Methods of the present disclosure may comprise training an initial machine learning element using training data comprising labelled user data in this form.

These and other methods of the present disclosure may enable query time to be estimated accurately for databases other than the database from which the training data originates.

Aspects and examples of the present disclosure are set out in the claims and aim to address the above-described technical problems and/or other technical problems.

Embodiments of the present disclosure may enable the machine learning element to estimate query time for any arbitrary database, not just the particular database (or particular databases) on which it has been trained.

In an aspect there is provided a computer implemented method of estimating database query time, the method comprising:
obtaining query data, defining a query which is to be executed on a database;
obtaining schema data for the database;
obtaining distribution data for the database, indicating a distribution of data content stored in the database;
identifying parts of the schema data referred to in the query data;
determining, based on the query data and the identified parts of the schema data, the corresponding parts of the distribution data,
providing a graph data structure encoding the query data, the identified parts of the schema data, and the corresponding parts of the distribution data; and,
operating a machine learning element on the graph data structure to estimate the query time.

Generally, a graph data structure comprises data defining nodes and data defining edges, wherein the edges define relationships between the nodes.

Providing the graph data structure may comprise determining an abstract syntax tree, AST, representing the query.

For example, providing the graph data structure may comprise, for each column, table or literal of the query, providing corresponding column nodes, table nodes and literal nodes of the graph data structure.

For example, providing the graph data structure may also comprise, for each element of the query which is not a column, table or a literal, providing an AST node. The AST node may comprise data encoding the corresponding element of the query, such as data encoding an operator found in the query.

For example, providing the graph data structure may comprise at least one of:
a) providing column nodes of the graph data structure, wherein the column nodes comprise data corresponding to database columns referenced by the query;
b) providing literal nodes of the graph data structure corresponding to literal data values referenced by the query,
c) providing table nodes of the graph data structure, wherein the table nodes comprise data corresponding to database tables referenced by the query; and
d) providing AST nodes of the graph data structure, corresponding to elements of the query which are not columns, tables or literals, such as operators included in the query.

The method may comprise providing literal nodes of the graph data structure, wherein the literal nodes comprise data values corresponding to literal data values referenced by the query. The literal nodes may comprise an indication of a relationship between the literal data values referenced by the query and a distribution of corresponding data in the database - for example as defined in corresponding parts of the distribution data.

The method may comprise providing AST nodes of the graph data structure, wherein the AST nodes comprise data encoding elements of the query which are not columns, tables or literals, such as data encoding operators.

The column and/or table nodes of the graph data structure may be based on parts of the schema data selected based on the query. For example, the method may comprise providing elements of the feature vector of a table or column node of the graph data structure based on the schema data. For example, the method may comprise determining a data type of a column based on the schema data, and updating an element of the feature vector for that column to indicate said data type. In addition, or as an alternative, the method may comprise providing edges of the graph data structure based on the schema data. For example, the method may comprise adding an edge to the graph data structure based on the schema data. As another example, the method may comprise updating an existing edge based on the schema data. This may overlay the graph data structure for the query with further information defining the relevant parts of the database schema.

The method may comprise providing edges of the graph data structure based on the query and/or based on the schema data, for example the edges may be based on parts of the schema data selected based on the query. For example, the edges may indicate relationships between nodes of the graph data structure corresponding to relationships defined in the database schema.

The edges of the graph data structure may comprise column-column and/ or table-column edges. The database's indexes may be identified based on the schema data and the edges may encode this information. It has been found that encoding this information in the graph data structure improves query time estimation. Providing the graph data structure may comprise populating the literal nodes with data based on the corresponding parts of the distribution data.

The literal nodes may be populated with data indicating a corresponding literal data value of the query. This may comprise a first element indicating a relative position in a distribution, such as a percentile. This may comprise a second element indicating a size of a population, to which the literal data value belongs in the distribution, such as a count of a histogram bin.

In a typical query, AST nodes may be present.

Column and table nodes generally also are present.

Literal nodes may be present if there is a literal value in the query.

The machine learning element generally comprises an input stage adapted for operating on graph data structures. The input stage may comprise a neural network, such as a GNN, for example a graph attention network, GAT. The input stage may comprise a series of said neural networks, such as a series of GNNs, for example series of GATs.

Other types of machine learning element, other than a neural network, may also be adapted operating on graph data structures. Such an ML element may be configured to extract features from a graph data structure and to operate on those extracted features with an ML classifier or regression learning approach, such as a decision tree. These embodiments may be configured to operate on input of arbitrary size, because as will be appreciated in the context of the present disclosure, graph data structures (and so each input to the ML) can be different in length/size. These embodiments may be configured to be permutation invariant (e.g. so that a different sequence of the same nodes does not erroneously lead to different output). One way to implement such an approach is to operate on a fixed size part of the graph data structure at a time and to aggregate the output using a permutation-invariant function. Other approaches may be used.

The input stage may be configured to provide output in the form of a fixed size vector output, e.g. a vector having a size which is independent of the user data provided to the input stage.

The machine learning element may further comprise a second stage configured to determine query time from the fixed size vector provided by the first stage.

The second stage comprises a regression stage, such as a regression head.

The machine learning element may comprise a pooling stage arranged to couple the output of the input stage to the input of the second stage.

The machine learning element may be configured to estimate database query time in an arbitrary database, different from the particular database (upon which the machine learning element was trained).

The plurality of items of training data may correspond to a plurality of different particular databases.

The plurality of items of training data all correspond to the same particular database (e.g. one single database).

In an aspect there is provided a method of making a machine learning element configured to estimate database query time, the method comprising:
providing an initial machine learning element, the initial machine learning element comprising an input stage for receiving user data, the input stage being adapted for user data encoded as a graph data structure, and the initial machine learning element being configured to output, based on the user data, an indication of database query time associated with a database query encoded by the user data;
obtaining a plurality of items of training data, wherein the training data comprises a plurality of graph data structures, each graph data structure being labelled with a corresponding indication of query time and encoding a respective corresponding one of a plurality of queries, wherein each graph data structure further encodes schema data for parts of a particular database schema referred to in the query and corresponding parts of distribution data indicating a distribution of data content stored in the particular database ; and,
training the initial machine learning element on the training data thereby to update the initial machine learning element to provide said machine learning element configured to estimate database query time.

The input stage of the initial machine learning element may be provided by a neural network, such as a GNN, for example a GAT.

The input stage may be configured to provide a fixed size vector as output.

The initial machine learning element may further comprise a second stage configured to determine query time from the fixed size vector provided by the input stage.

Embodiments provide a computer program product comprising program instructions configured to program a programmable processor to perform any one or more of the methods described herein.

Embodiments provide computer apparatus configured to perform any one or more of the methods described herein.

Any feature of any one of the examples disclosed herein may be combined with any selected features of any of the other examples described herein.

For example, features of methods may be implemented in suitably configured hardware, and the configuration of the specific hardware described herein may be employed in methods implemented using other hardware.

### Brief Description of Drawings

Embodiments of the disclosure will now be described in detail with reference to the accompanying drawings, in which:
Figure 1 shows a very schematic diagram of a computing apparatus configured to perform a method of the present disclosure;
Figure 2 shows a flow chart illustrating a method of the present disclosure;
Figure 3 illustrates a graph data structure encoding a database query ;
Figure 4 shows a flow chart illustrating a method of the present disclosure; and,
Figure 5 shows a flow chart illustrating a method of the present disclosure.

In the drawings like reference numerals are used to indicate like elements.

### Specific Description

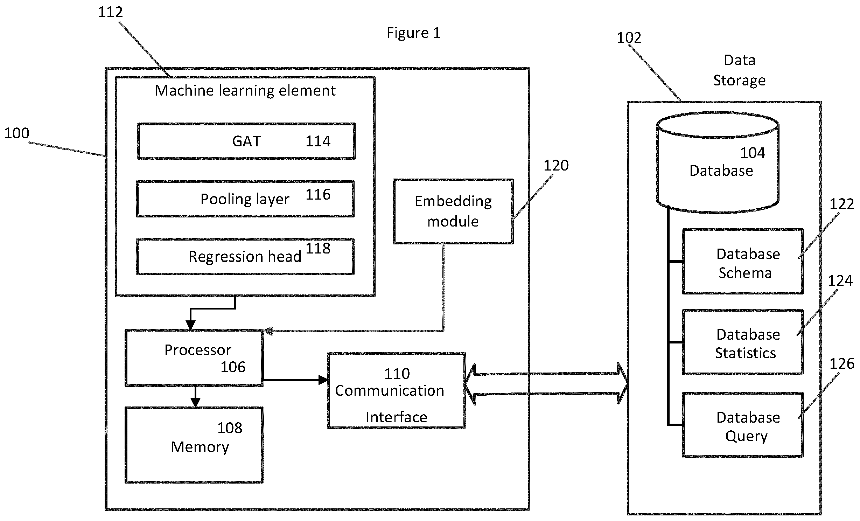

Figure 1 shows a computer apparatus 100 configured to perform the methods of the present disclosure, and data storage 102 comprising a database 104.

The computer apparatus comprises a processor 106, a memory 108, and a communication interface 110. The processor 106 and/or the memory 108 of the computer apparatus 100 are configured to provide a machine learning element 112.

In the example illustrated in Figure 1, the machine learning element 112 comprises an input stage 114, an intermediate stage 116 and a second stage 118.

The input stage 114 may comprise a graph attention network (GAT), which is configured to take input data (user data) in the form of a graph data structure, update the content of that graph data structure (e.g. as outlined below), and then to output an updated graph data structure. The GAT may include a number of stacked layers of Graph Attention Networks and at least three layers may be preferred. The layers of the GAT may each operate to update the feature vectors at the nodes of graph data structure according to the operations defined by the GAT and the relative weighting of those operations.

The intermediate stage 116 may be configured to perform a pooling operation, in which it receives a graph data structure as input from the input stage 114 (e.g. the output from the stack of GATs) and transforms that graph data structure into a fixed size vector. As will be apparent to the skilled addressee in the context of the present disclosure, as an alternative to pooling this transformation may be done using a transformer. It is further configured to pass that fixed size vector to the second stage 118, which may be a regression head.

The second stage 118 (e.g. regression head) is configured to take the fixed size vector from the intermediate stage 16 and use it to generate an indication of the query time. This may be done by any appropriate type of model - examples include neural networks and linear estimators.

The processor 106 and/or the memory 108 of the computer apparatus are further configured to provide an embedding module 120.

The communication interface 110 is arranged to provide communication between the computing apparatus 100 and the data storage 102 and database 104.

As illustrated, the database 104 is implemented on data storage 102 and comprises data defining the database schema 122, and the database statistics 124. The schema data 122 defines the structure of the database 104, in terms of the tables which make up the database and the columns of those tables. The database statistics 124 comprise distribution data defining the distribution of the data values contained in the tables of the database 104.

To implement the embedding module 120, the processor 106 is configured to first obtain data defining a database query 126, which may be obtained from a user input or from the database 104 itself - e.g. via the communication interface 110. Typically, this data is in the form of a computer readable instruction, such as an SQL query.

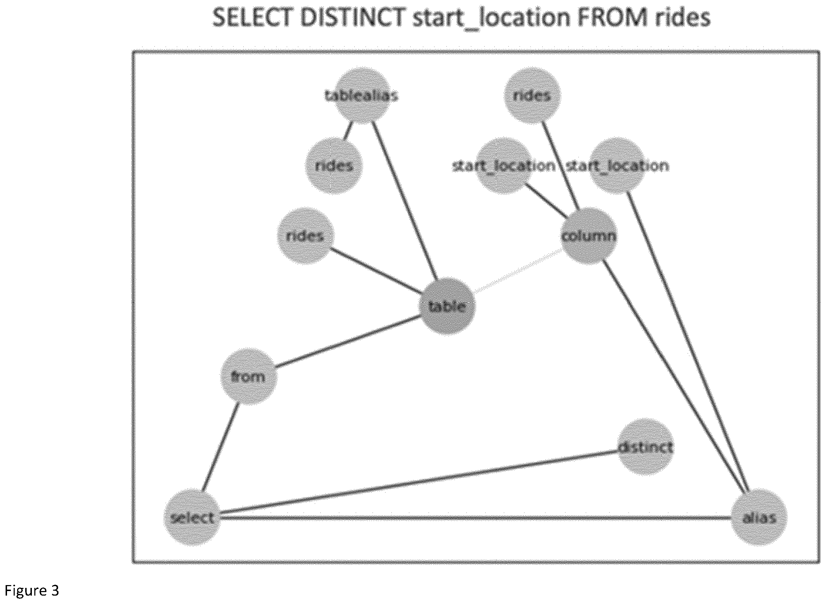

An example of such a query might be: "*SELECT DISTINCT start_location FROM rides".* This might refer to a database in which a table, called "rides" included a column "start_location". The graph data structure resulting from such a query is illustrated in Figure 3.

Examples of node types and examples of information encoded in their feature vectors are detailed in Table 1.

**Table 1: the input graph's node types and corresponding features**

| **Node type** | **Example features in feature vector** |
|---|---|
| Table | Row count |
| | Number of columns |
| | Average bit size of elements in table |
| Column | Count of operator statements |
| | *e.g. how many times does it appear in WHERE, JOIN, etc. statements* |
| | Average bit size of elements in the column |
| | Average density of distinct values in column |
| | One-hot encoded data type |
| | *e.g. data type could be* '*string*' *or* '*datetime*' |
| | Maximum bit size of elements in the column |
| Literal | Position in column's data distribution (between 0 and 1), analogous to histogram bin number |
| *e.g. the '10' in* '*SELECT Product FROM Products WHERE Price > 10* | |
| | Estimated proportion of rows in the column that equal this value |
| AST | One-hot encoded operator type |
| *e.g. 'SELECT' operator* | |

Examples of edge types are detailed in Table 2.

**Table 2: the input graph's edge types**

| **Source node** | **Destination node** | **Edge type (relationship)** |
|---|---|---|
| Column | Table | Is a primary index of |
| Column | Table | Is other index of |
| Column | Table | Belongs to |
| Column | Column | Next in index |
| Column | Column | Shares table |
| Column | AST | Column-AST edge |
| Table | AST | Table-AST edge |
| AST | AST | AST-AST edge |
| AST | Literal | AST-literal edge |

To implement the embedding module 120, the processor 106 is also configured to obtain schema data 122 and distribution data 124 from the database 104. The processor 106 parses the query data and converts the query data into a data structure known as an abstract syntax tree (AST). To generate the AST data structure, the processor identifies any operators (commands) in the query and provides data, in the AST data structure, which defines a node representing those operators.

The processor 106 is further configured to provide data, in the AST data structure, which defines a node representing any arguments or modifiers of those operators and the data which they reference - such as the columns or tables of the database and any literal values. The processor also uses the query data to generate data defining edges in the AST representation of the query.

The processor 106 is further configured to use the schema data and the distribution data to populate the nodes and edges with information further defining the query and its relationship to the database. This provides a graph data structure which includes a feature vector for each node of the graph, and data defining the "edge" relationships between those nodes. This process "overlays" the database information (schema and statistics) onto the AST for the query and involves computing up to four types of nodes, which allow the database information to be embedded into a unified graph data structure. This unified graph data structure provides a representation of the query in terms of "ast nodes", "column nodes", "literal nodes", "table nodes", and the edges between those nodes.

The schema information is overlaid onto the AST by:
1) populating the nodes with data values (feature vectors) based on the schema and database statistics.
2) identifying the edges between those nodes based on the schema, and categorising those edges based on the schema. For example, edge types indicate relationships between nodes in the database schema such as: primary index, secondary index, belongs to, etc.

The database schema includes information which defines the tables in the database and the columns in those tables. The column names in the query will be present in the abstract syntax tree which represents the query.

In more detail, the types of nodes are:
- **Column nodes** - For each column which is referenced in the query, the unified graph structure includes a corresponding "column node". This contains a feature vector which describes the column - relevant parameters include (for example):
   ∘ count of operator statements,
   ∘ average bit size,
   ∘ average density,
   ∘ data types,
   ∘ maximum bit size.

This is not information about the statistical distribution of the data (the content of the column), but rather the characteristics of the data that is stored in the column.

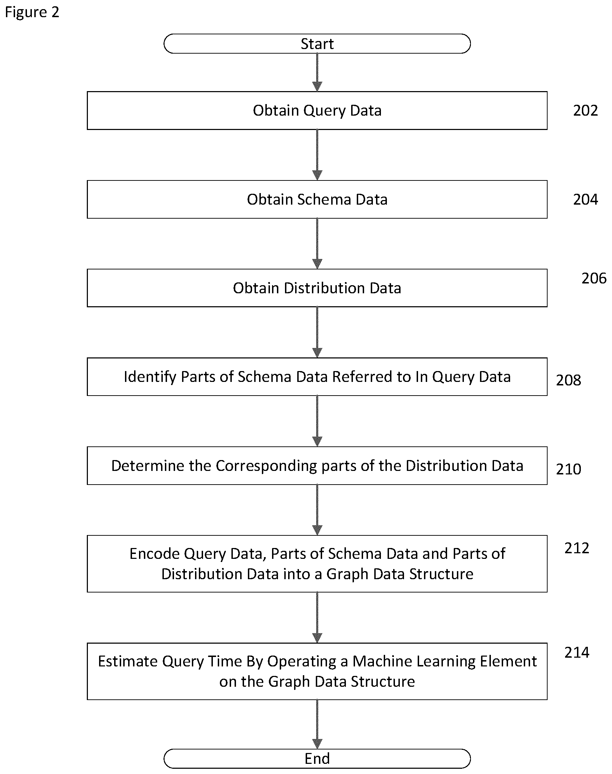

In the case of a column node, for example, some elements of its respective feature vector may encode the data type (e.g. 'int') stored in this column. For example, one element of the column feature vector may be a binary: 1 if the data type is 'int' and 0 otherwise. Other examples are possible.
- **Literal nodes** - For each literal value which is referenced in the query, the unified graph structure includes a corresponding "literal node". Each literal node contains a 2-element feature vector. The first element tells you the percentile of where *this literal* falls within the data. This is useful for "<" or ">" comparisons. The second element contains an estimate of the number of records within this bin of the histogram. This is useful for "=" comparisons.
- **Table nodes** - For each table which is referenced in the query, the unified graph structure may include a corresponding "table node".
- **AST nodes** - for all other nodes in the graph that do not correspond to columns, tables or literal values, these are assigned as AST nodes. An example would be an operator, such as a command in the query. The example shown in Figure 2 is the 'SELECT' node of the query's AST (which is often the root node of the graph). The feature vector for AST nodes may initially be one-hot encoded. One-hot encoding is a method in machine learning for converting categorical variables into a numerical format. It creates a new binary column for each unique category in a feature, where a '1' indicates the presence of that category and a '0' indicates its absence.

The result of this process is a unified graph data structure which encodes the query, the database schema and the database statistics which are relevant to that query. Specifically, the unified graph structure may include data, obtained from the database schema, which defines the edges between the table nodes and the corresponding columns of that table.

The feature vectors at the table nodes, column nodes, literal nodes and AST nodes contain data upon which query execution time depends - e.g. because it indicates the number of relevant records and the relationships which need to be traversed to retrieve that information.

Providing a combined representation of the query data, the database schema, and the database statistics which are relevant to that query data may be significant for two reasons.

Firstly, it represents the relevant information and relationships concisely without loss of information or sparsity. This conciseness provides the machine learning (ML) model with the best chance at learning and doing so efficiently.

Secondly, by representing the data in a single graph, a single ML model can be used that considers all the relevant input data together during each weight update step, as opposed to processing the schema and query separately (e.g. in isolation from each other), and then combining the output downstream and trying to feed that back to update the weights. This would mean that the paths are more convoluted, the model is harder to train, and the model is more unstable. This can lead to the vanishing gradient problem or at least problems related to that, which may prevent the machine learning from converging efficiently on a correct solution.

By contrast, embodiments of the present disclosure reduce the length of the propagation chain between potentially relevant input features and the weight updates. The unified graph data structure generated by the processor's implementation of the embedding module may lead to a more accurate model and better query time prediction.

Having generated the graph data structure which encodes the query, the relevant parts of the schema data, and the corresponding parts of the distribution data, as outlined above, the processor passes this graph data structure to the input stage of the machine learning element, which may comprise a GAT.

The input stage of the ML element then operates on each feature vector in the graph data structure to project each feature vector onto a corresponding fixed hidden size vector (e.g. a vector where the number of elements (dimension) is predetermined and cannot be changed after initialization). This generates a fixed size feature vector for each of the nodes of the graph data structure.

The input stage of the ML element then operates on the graph data structure using a GAT, in which each node is considered in turn, and its fixed size feature vector is updated based on a weighted amount of itself and its immediate neighbours to generate a new graph data structure representation - e.g. in each layer of the GAT, the graph data structure is adjusted according to these weights. How much a node in the new representation is influenced by a given neighbour, and/or the weight applied to each neighbour, is the learned property. As explained below, these weights are learned through the minimisation of a loss function that measures the performance of the ML element (as a whole) in predicting query time.

In each individual GAT layer, each node of the input data is adjusted only based on its immediate neighbours. In some embodiments, three GAT layers are stacked in series. This enables the input stage to reflect longer-range dependencies between nodes in the graph data structure which it produces as its output.

The output of the GAT is a latent representation of the initial graph, with updated feature vectors for each of the nodes as calculated by the three layers of GATs. The ML element is trained, as explained below, so that this may provide a compressed encoding of the data which captures the features or patterns of the original graph data structure which are relevant to query time prediction. In other words - the trained input stage of the ML model transforms the input feature space into a different feature space that more clearly maps to query time. The position of the input sample in this multi-dimensional feature space has meaning with respect to query time.

### Pooling

The output of the GAT is an updated feature vector for each node, where each feature vector has a fixed hidden size, say *m.* Take *n* as the number of nodes in the graph. Each of the feature vectors are stacked, to produce a matrix of size n (number of nodes) by *m* (fixed hidden size). Due to the nature of graphs, the number of nodes, n, may vary significantly. Neural networks rely on a fixed size input, therefore this *n* x *m* matrix is reduced to a vector of size 1 x *m*, to be passed to the final neural network, the regression head.

The intermediate stage of the ML element may be configured to use any of a variety of approach to convert the output of the input stage to a fixed size feature vector. Two methods are outlined below.
- Transformers: The input is (notionally) an arbitrary-length sequence and the output is a fixed size vector where the mapping between the arbitrary-length input and fixed-size output is based on a self-attention mechanism. The input sequence is formed by stacking all the feature vectors from a graph together into a single matrix of size N x M, where N is the number nodes in the graph and M is the hidden size of the final Graph Attention Network (GAT)
- Conventional pooling method: the transformation from input to output sequence is a simple operation like mean, max, or sum of the values along a dimension of the input matrix (any permutation-invariant operation could be used to perform this). This will result in some necessary loss of information.

### Regression Head

The intermediate stage is configured to pass this fixed size vector to the second stage of the ML element, which may be a regression head, such as a neural network. This neural network may have two layers. The intermediate stage is configured to output a single scalar value indicative of the query time.

The range of estimated query times can be vast, therefore the output of the neural network represents the log of the query time, to transform to a narrower output range. The regression head outputs log transformed query time, from which absolute time can be readily obtained.

This ML approach is generalisable across databases. Therefore, features are not specific to a particular database, and the trained model can be deployed on unseen databases and provide accurate descriptions.

Operation of the apparatus described above will now be described with reference to Figure 2.

As illustrated, this method comprises, the processor obtaining 202 query data. As mentioned above this may be provided by user input or from the database. This query data typically comprises computer readable instructions defining a query which is to be executed on a database.

The processor then also obtains 204 schema data, which defines the structure of the database, and obtains 206 distribution data for the database. This indicates a distribution of data content stored in the database described by the schema data.

The processor then identifies 208 the parts of the schema data which are referred to by the query data. For example, the processor may identify that the query references a particular column in a particular table as defined in the schema data.

The processor uses this to determine 210 the parts of the distribution data which are relevant to the query - for example it may identify the parts of the distribution data which define the statistics of the database content in the columns and/or tables referred to in the query.

The processor then provides 212 a graph data structure encoding the query data, the identified parts of the schema data, and the corresponding parts of the distribution data. For example, the processor may generate a graph data structure having a column node for each column of the schema that is referred to in the query and a table node and a table node for each table that is referred to in the query. To encode the query in the graph data structure, the processor may also add a literal node to the graph data structure for each literal value which is referenced in the query. Each literal node may comprise a feature vector, having a first element indicating where the literal value falls within the data, and a second element indicating an estimate of the number of records within the same bin of the histogram as the literal value.

The process, 202, 204, 206, 208, 210, 212 described above may correspond to operations performed by the embedding module of the apparatus illustrated in Figure 1.

The processor may then operate 214 the ML element on the resulting graph data structure to estimate the query time.

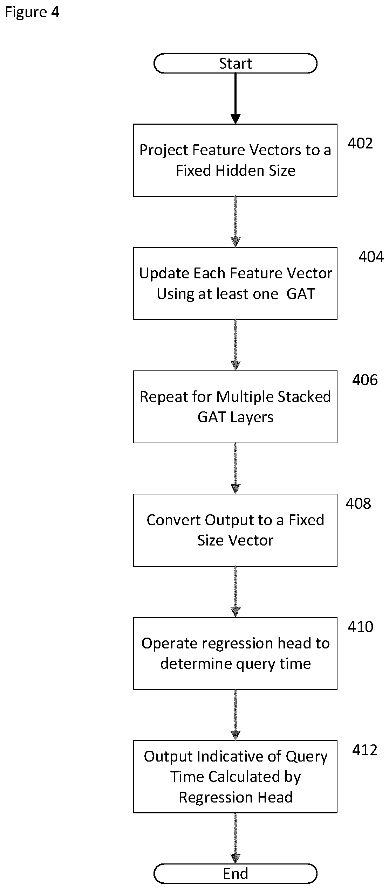

One example of operation of the ML element to estimate query time will now be described with reference to Figure 4.

First, the input stage of the machine learning element operates 402 on the graph data structure produced by the embedding stage to project the feature vectors of the nodes onto vectors of a fixed hidden size. This may be done by a layer of a GNN (such as a GAT). Then, the input stage updates 404 these feature vectors, such as according to weights defined in the nodes of the GNN. If the input stage includes stacked GATS the updated feature vectors produced by the first GAT layer is passed to the next GAT layer, and so on, so the update process may be repeated 406 through each layer of the stacked GAT. The input stage then provides the updated graph data structure as output, which is passed to the intermediate stage of the ML element.

The intermediate stage converts 408 the updated graph data structure into a fixed size vector which it passes to the second stage, which generally is configured as a regression head.

The second stage is configured to determine 410 query time from this fixed size vector and to output 412 an indication of the query time.

A method of making the machine learning element of the computer apparatus described above will now be described in the context of a training method, for training the ML element to provide an accurate estimate of query time. It will be appreciated in the context of the present disclosure that the directly obtained product of such a training method is an ML element which is able to estimate query time according to the methods described herein. This may be encoded as machine readable data and optionally stored in a tangible data storage medium and/or transmitted as a machine-readable signal. One example of a machine-readable signal a computer-readable network message.

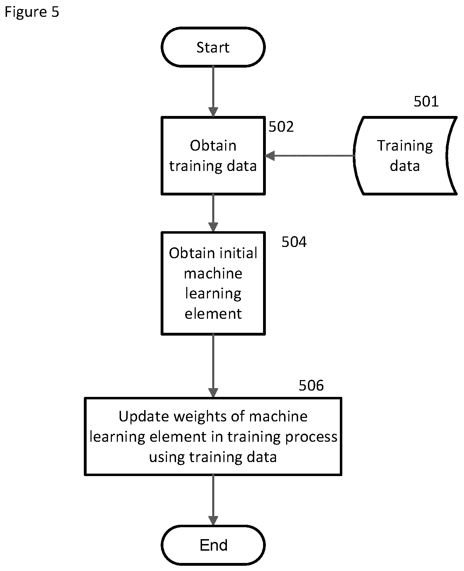

One such training method is illustrated in Figure 5.

The training data for this method consists of a set of database queries, and corresponding schema data and distribution data for the databases upon which those queries were to operate. The queries of the training data are encoded as the graph data structures described above - e.g. each graph data structure encodes a query and the schema data for the parts of a particular database schema referred to in the query and corresponding parts of the distribution data. In the training data these graph data structures are also labelled with a corresponding query time. For example, this query time may be determined by monitoring the execution of the query on the database defined by the schema and having database contents as defined by the distribution data.

In the method illustrated in Figure 5, the training data 501 can be obtained 502 by retrieving stored data or by monitoring of a database.

An initial machine learning element may then be obtained. Typically this initial machine learning element comprises an input stage adapted for operating on graph data structures, an intermediate stage, and a second stage. The intermediate stage is arranged to couple the output of the input stage to the input of the second stage.

Generally, the input stage comprises a graph attention network, GAT, or other machine learning element adapted to operate on graph data structures and to provide as its output, a graph data structure in which the nodes are defined by feature vectors having a fixed hidden size. The operations performed by this input stage of the machine learning element are defined by a first set of weights and biases.

Thus, when a graph data structure of the training data is provided to the input stage, a graph data structure comprising nodes having feature vectors of fixed hidden size is provided to the intermediate stage which converts this graph data structure to a vector of fixed size (e.g. by averaging or by performing some other combining operation). This fixed size vector is provided to the second stage, which is configured to determine an indication of query time by performing set of operations on that vector. The operations performed by this second stage of the machine learning element are defined by a second set of weights and biases.

The indication of query time produced by the second stage of the machine learning element is used in a loss function with the known query time defined in the training data and used to update the first set of weights and/or the second set of weights of the stages of the machine learning element. The loss function may be based on the mean squared error and may operate on log(query time).

It can therefore be seen that the first stage and the second stage of the machine learning element are trained together.

It will be appreciated in the context of the present disclosure that the training process may comprise the samples of training data being fed in batches into the ML element and the loss calculated (forward pass). A backward pass may then also calculate the gradients (partial derivatives of loss function with respect to each parameter in the network) and the parameters (first and/or second set of weights) are updated based on gradient descent.

This process is then repeated until a selected level of convergence or stopping criterion is met.

Other training approaches may be used.

The training data may be generated on the same environment throughout, as query time is also affected by server factors such as processing power. By keeping server-relevant parameters constant they can be excluded from the model.

As the information about both the schema and query are contained in one unified input, the GAT is not specifically trained for one database. The trained model can be deployed on unseen databases and provide accurate predictions. This zero-shot learning approach provides a general model which can be deployed across multiple databases and customers, without retraining the model for each specific database. Additionally, by working on a unified input, the model can consider all input features and all potentially relevant connections without arbitrary separation in the input space.

### Glossary:

**Abstract Syntax Tree (AST):** a data structure which represents the underlying syntactic structure of a code snippet, such as a database query.

**Graph:** a graph is data structure that consists of a finite set of objects (known as nodes), connected by a set of edges.

**Nodes:** nodes represent individual entities in a graph and are often denoted by unique labels or identifiers.

**Edges:** edges connect pairs of nodes and represent the relationships between them. These relationships can either be symmetric or directional.

**Graph Attention Network (GAT):** A GAT is a known neural network architecture that operates on graph-structured data. It uses masked self-attentional layers to address the shortcomings of prior methods based on graph convolutions or their approximations. GATs are a type of ML model which is suited to understanding the relative importance of different connections in a graph. For example, the presence of an index (table-column relationship) can often significantly impact the execution time of a query, and GATs are adapted for identifying this type of relationship.

It will be appreciated from the discussion above that the embodiments shown in the Figures are merely exemplary, and include features which may be generalised, removed or replaced as described herein and as set out in the claims. With reference to the drawings in general, it will be appreciated that schematic functional block diagrams are used to indicate functionality of systems and apparatus described herein. It will be appreciated however that the functionality need not be divided in this way, and should not be taken to imply any particular structure of hardware other than that described and claimed below. The function of one or more of the elements shown in the drawings may be further subdivided, and/or distributed throughout apparatus of the disclosure. In some embodiments the function of one or more elements shown in the drawings may be integrated into a single functional unit.

In some examples the functionality of the controller may be provided by a general purpose processor, which may be configured to perform a method according to any one of those described herein. In some examples the controller may comprise digital logic, such as field programmable gate arrays, FPGA, application specific integrated circuits, ASIC, a digital signal processor, DSP, or by any other appropriate hardware. In some examples, one or more memory elements can store data and/or program instructions used to implement the operations described herein. Embodiments of the disclosure provide tangible, non-transitory storage media comprising program instructions operable to program a processor to perform any one or more of the methods described and/or claimed herein and/or to provide data processing apparatus as described and/or claimed herein. The controller may comprise an analogue control circuit which provides at least a part of this control functionality. An embodiment provides an analogue control circuit configured to perform any one or more of the methods described herein.

The above embodiments are to be understood as illustrative examples. Further embodiments are envisaged. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. A computer implemented method of estimating database query time, the method comprising:
obtaining query data, defining a query which is to be executed on a database;
obtaining schema data for the database;
obtaining distribution data for the database, indicating a distribution of data content stored in the database;
identifying parts of the schema data referred to in the query data;
determining, based on the query data and the identified parts of the schema data, the corresponding parts of the distribution data,
providing a graph data structure encoding the query data, the identified parts of the schema data, and the corresponding parts of the distribution data; and,
operating a machine learning element on the graph data structure to estimate the query time.

2. The computer implemented method of claim 1 wherein providing the graph data structure comprises at least one of:
a) providing column nodes of the graph data structure, wherein the column nodes comprise data corresponding to database columns referenced by the query;
b) providing literal nodes of the graph data structure corresponding to literal data values referenced by the query,
c) providing table nodes of the graph data structure, wherein the table nodes comprise data corresponding to database tables referenced by the query and
d) providing AST nodes of the graph data structure, corresponding to elements of the query which are not columns, tables or literals, such as operators included in the query,
for example, providing the graph data structure may comprise providing elements of a feature vector of a table or column node and/or providing edges of the graph data structure based on the schema data.

3. The computer implemented method of claim 2 wherein providing the graph data structure comprises populating the literal nodes based on the corresponding parts of the distribution data.

4. The computer implemented method of any preceding claim, wherein the machine learning element comprises an input stage adapted for operating on graph data structures.

5. The computer implemented method of claim 4 wherein the input stage comprises a neural network, such as a GNN, for example a graph attention network, GAT.

6. The computer implemented method of claim 5 wherein the input stage comprises a series of said neural networks, such as a series of GNNs, for example series of GATs.

7. The computer implemented method of any of claims 4 to 6 wherein the input stage is configured to provide output in the form of a fixed size vector output, and the machine learning element further comprises a second stage configured to determine query time from the fixed size vector provided by the first stage.

8. The computer implemented method of claim 7 wherein the second stage comprises a regression stage.

9. The computer implemented method of claim 7 or 8 wherein the machine learning element comprises a pooling stage arranged to couple the output of the input stage to the input of the second stage.

10. A method of making a machine learning element configured to estimate database query time, the method comprising:
providing an initial machine learning element, the initial machine learning element comprising an input stage for receiving user data, the input stage being adapted for user data encoded as a graph data structure, and the initial machine learning element being configured to output, based on the user data, an indication of database query time associated with a database query encoded by the user data;
obtaining a plurality of items of training data, wherein the training data comprises a plurality of graph data structures, each graph data structure being labelled with a corresponding indication of query time and encoding a respective corresponding one of a plurality of queries, wherein each graph data structure further encodes schema data for parts of a particular database schema referred to in the query and corresponding parts of distribution data indicating a distribution of data content stored in the particular database ; and,
training the initial machine learning element on the training data thereby to update the initial machine learning element to provide said machine learning element configured to estimate database query time.

11. The method of claim 10 wherein an input stage of the initial machine learning element is provided by a neural network, such as a GNN, for example a GAT.

12. The method of claim 11 wherein the input stage is configured to provide a fixed size vector as output.

13. The method of claim 12 wherein the initial machine learning element further comprises a second stage configured to determine query time from the fixed size vector provided by the input stage.

14. A computer program product comprising program instructions configured to program a programmable processor to perform the method of any preceding claim.

15. A computer apparatus configured to perform the method of any of claims 1 to 13.

## Amended claims

### Amended claims in accordance with Rule 137(2) EPC.

1. A computer implemented method of estimating database query time, the method comprising:
obtaining query data, defining a query which is to be executed on a database;
converting the query data into an abstract syntax tree;
obtaining schema data for the database, wherein the database comprises tables and columns, and the schema data defines the structure of the database in terms of the tables and columns;
obtaining distribution data for the database, indicating a distribution of data content stored in the database;
identifying parts of the schema data referred to in the query data;
determining, based on the query data and the identified parts of the schema data, the corresponding parts of the distribution data,
providing a graph data structure encoding the query data, the identified parts of the schema data, and the corresponding parts of the distribution data, wherein the graph data structure is provided by overlaying the identified parts of the schema data and the corresponding parts of the distribution data onto the abstract syntax tree representing the query; and,
operating a machine learning element on the graph data structure to estimate the query time, wherein the machine learning element comprises an input stage adapted for operating on graph data structures, wherein the input stage comprises a neural network.

2. The computer implemented method of claim 1 wherein providing the graph data structure comprises at least one of:
a) providing column nodes of the graph data structure, wherein the column nodes comprise data corresponding to database columns referenced by the query;
b) providing literal nodes of the graph data structure corresponding to literal data values referenced by the query,
c) providing table nodes of the graph data structure, wherein the table nodes comprise data corresponding to database tables referenced by the query and
d) providing AST nodes of the graph data structure, corresponding to elements of the query which are not columns, tables or literals, such as operators included in the query,
for example, providing the graph data structure may comprise providing elements of a feature vector of a table or column node and/or providing edges of the graph data structure based on the schema data.

3. The computer implemented method of claim 2 wherein providing the graph data structure comprises populating the literal nodes based on the corresponding parts of the distribution data.

4. The computer implemented method of any preceding claim wherein the input stage comprises a GNN, for example a graph attention network, GAT.

5. The computer implemented method of any preceding claim, wherein the input stage comprises a series of said neural networks, such as a series of GNNs, for example series of GATs.

6. The computer implemented method of any preceding claim wherein the input stage is configured to provide output in the form of a fixed size vector output, and the machine learning element further comprises a second stage configured to determine query time from the fixed size vector provided by the input stage.

7. The computer implemented method of claim 6 wherein the second stage comprises a regression stage.

8. The computer implemented method of claim 6 or 7 wherein the machine learning element comprises a pooling stage arranged to couple the fixed size vector output of the input stage to the input of the second stage.

9. A method of making a machine learning element configured to estimate database query time, the method comprising:
providing an initial machine learning element, the initial machine learning element comprising an input stage for receiving user data, the input stage being adapted for user data encoded as a graph data structure, and the initial machine learning element being configured to output, based on the user data, an indication of database query time associated with a database query encoded by the user data;
obtaining a plurality of items of training data, wherein the training data comprises a plurality of graph data structures, each graph data structure being labelled with a corresponding indication of query time and encoding a respective corresponding one of a plurality of queries, wherein each graph data structure further encodes schema data for parts of a particular database schema referred to in the query and corresponding parts of distribution data indicating a distribution of data content stored in the particular database, wherein the particular database schema defines the structure of the database in terms of tables and columns, and wherein each graph data structure is provided by overlaying the schema data and the corresponding parts of the distribution data onto an abstract syntax tree representing the database query ; and,
training the initial machine learning element on the training data thereby to update the initial machine learning element to provide said machine learning element configured to estimate database query time, wherein the input stage of the initial machine learning element is provided by a neural network.

10. The method of claim 11 wherein an input stage of the initial machine learning element is provided by a GNN, for example a GAT.

11. The method of claim 10 wherein the input stage is configured to provide a fixed size vector as output.

12. The method of claim 11 wherein the initial machine learning element further comprises a second stage configured to determine query time from the fixed size vector provided by the input stage.

13. A computer program product comprising program instructions configured to program a programmable processor to perform the method of any preceding claim.

14. A computer apparatus configured to perform the method of any of claims 1 to 12.
